# EUROPEAN PATENT APPLICATION

(11) **EP 4 808 141 A1**
(43) Date of publication of application: **16.09.2026**
(21) Application number: 24915490.7
(22) Date of filing: 19.12.2024
(51) Int. Cl.: H04N 23/88, G06V 10/82, G06V 10/764, G06N 3/08, H04N 23/84

(54) **ELECTRONIC DEVICE FOR PROCESSING IMAGE SIGNALS AND IMAGE SIGNAL PROCESSING METHOD**

(30) Priority: 03.01.2024 KR 20240000707; 18.01.2024 KR 20240008168
(71) Applicant: Samsung Electronics Co., Ltd., Suwon-si, Gyeonggi-do 16677 (KR)
(72) Inventor: SEOK, Jinkeun, Suwon-si Gyeonggi-do 16677 (KR); SHON, Seungwan, Suwon-si Gyeonggi-do 16677 (KR); OH, Saetek, Suwon-si Gyeonggi-do 16677 (KR)
(74) Representative: Gulde & Partner
(86) International application number: PCT/KR2024/097167
(87) International publication number: WO 2025/147080

(57) **Abstract**

An electronic device according to an embodiment may include a camera, one or more processors, and a memory. The electronic device may determine object category information for classifying a plurality of blocks of an image captured through the camera, update the object category information, based on a category map for the image, and correct color information for the image, based on the updated object category information. In addition to the above-described embodiment, various other embodiments are possible.

## Description

### [TECHNICAL FIELD]

The disclosure relates to an electronic device for processing an image signal, and a method in which the electronic device processes the image signal.

### [BACKGROUND ART]

A digital camera may be mounted in an electronic device. The digital camera may generate an image by converting light into an electrical signal by using an image sensor. The electronic device may obtain a corrected image by using an image signal processor. Image signal processing may refer to a process of processing raw data received from the image sensor such as a camera. For example, an auto white balance (AWB) function performed by the electronic device to provide accurate colors for an image may include a process of adjusting gains for color components (e.g., a red component, a green component, and a blue component) of the image, based on a white point, so that the image is corrected according to a color temperature of light to represent colors similar to those perceived by a user's vision.

The foregoing information may be provided as the related art for purposes of helping understanding of the disclosure. No claim or decision is made as to whether the foregoing content is applicable as the prior art related to the disclosure.

### [DISCLOSURE OF INVENTION]

### [SOLUTION TO PROBLEM]

In an embodiment, an electronic device may include a camera, one or more processors, and a memory. The memory may store a neural network model trained through machine learning to output a category map including category information for classifying types of subjects corresponding to a plurality of regions of an input image. The memory may store one or more instructions. The one or more instructions, when executed by the one or more processors, may cause the electronic device to obtain image data for an image obtained through the camera. The one or more instructions, when executed by the one or more processors, may cause the electronic device to obtain a category map corresponding to the image by using the neural network model. The one or more instructions, when executed by the one or more processors, may cause the electronic device to determine, with respect to a plurality of blocks dividing the image into a plurality of regions, object category information for classifying the plurality of blocks, based on colors. The one or more instructions, when executed by the one or more processors, may cause the electronic device to update at least part of the object category information for at least some of the plurality of blocks, based on the category map. The one or more instructions, when executed by the one or more processors, may cause the electronic device to correct color information for the image, based on the updated object category information.

A method of processing an image signal by an electronic device according to an embodiment may include obtaining image data for an image obtained through a camera of the electronic device. The method may include obtaining a category map corresponding to the image using a neural network model trained through machine learning to output a category map including category information classifying types of subjects corresponding to a plurality of regions of an input image. The method may include determining, with respect to a plurality of blocks dividing the image into a plurality of regions, object category information for classifying the plurality of blocks, based on colors. The method may include updating at least part of the object category information for at least some of the plurality of blocks, based on the category map. The method may include correcting color information for the image, based on the updated object category information.

A non-transitory computer-readable recording medium according to an embodiment may store a computer program which causes the electronic device to perform the aforementioned operation.

### [BRIEF DESCRIPTION OF DRAWINGS]

FIG. 1 is a block diagram illustrating an electronic device in a network environment according to various embodiments.
FIG. 2 is a block diagram illustrating the camera module according to various embodiments.
FIG. 3 is a flowchart illustrating a process in which an electronic device performs image signal processing, according to an embodiment;
FIG. 4 illustrates concepts of statistics data and a category map for an image, according to an embodiment;
FIG. 5 illustrates concepts of updating object category information, according to an embodiment;
FIG. 6 is a block diagram illustrating a process of performing signal processing on raw data, according to an embodiment;
FIG. 7 illustrates an example of an image obtained according to an embodiment; and
FIG. 8 is a flowchart illustrating an example of a process in which an electronic device performs image signal processing, according to an embodiment.

### [MODE FOR THE INVENTION]

Hereinafter, with reference to the attached drawings, embodiments are described in detail so as to be readily implemented by those skilled in the art to which the disclosure pertains. However, the disclosed embodiments may be realized in different forms and are not limited to the embodiments described herein.

An electronic device and an image signal processing method according to an embodiment are for improving performance of image signal processing.

An electronic device and an image signal processing method according to an embodiment are for determining an auto white balance (AWB) gain value, based on colors of a light source and a subject.

An electronic device and a signal processing method according to an embodiment are for correcting colors of an image, based on colors of a light source and a subject type.

Technical problems to be solved in the disclosure are not limited to the technical problems mentioned above, and other technical problems not mentioned herein may be clearly understood by those skilled in the art to which the disclosure pertains from the following descriptions.

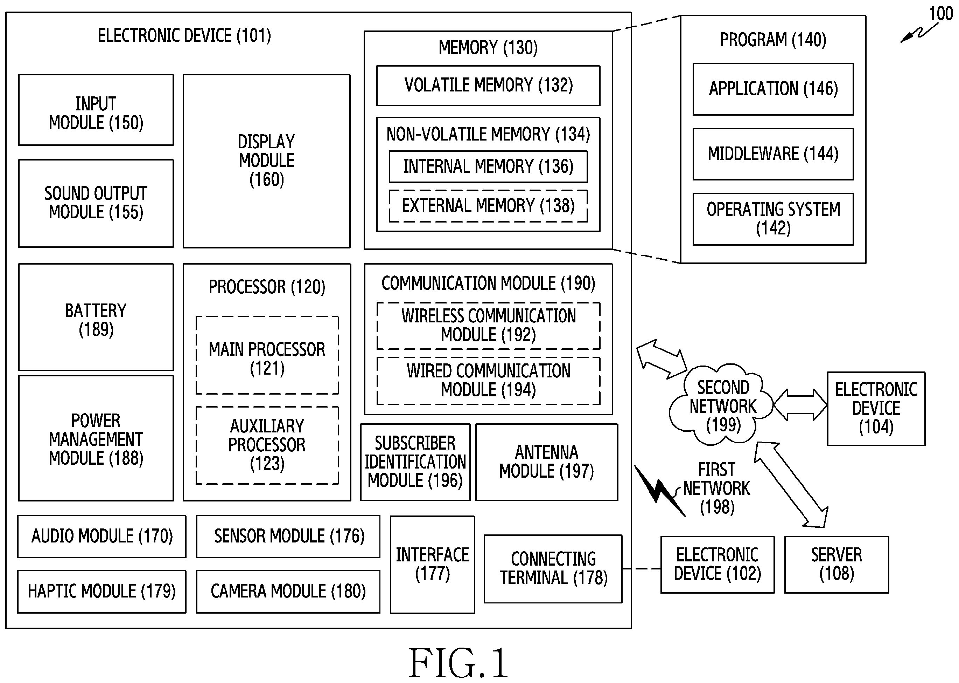

Fig. 1 is a block diagram illustrating an electronic device 101 in a network environment 100 according to various embodiments. Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In an embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

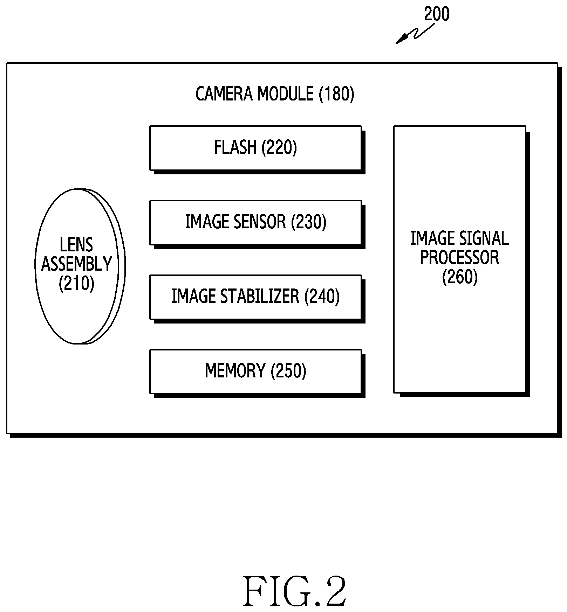

Fig. 2 is a block diagram 200 illustrating the camera module 180 according to various embodiments. Referring to Fig. 2, the camera module 180 may include a lens assembly 210, a flash 220, an image sensor 230, an image stabilizer 240, memory 250 (e.g., buffer memory), or an image signal processor 260. The lens assembly 210 may collect light emitted or reflected from an object whose image is to be taken. The lens assembly 210 may include one or more lenses. According to an embodiment, the camera module 180 may include a plurality of lens assemblies 210. In such a case, the camera module 180 may form, for example, a dual camera, a 360-degree camera, or a spherical camera. Some of the plurality of lens assemblies 210 may have the same lens attribute (e.g., view angle, focal length, auto-focusing, f number, or optical zoom), or at least one lens assembly may have one or more lens attributes different from those of another lens assembly. The lens assembly 210 may include, for example, a wide-angle lens or a telephoto lens.

The flash 220 may emit light that is used to reinforce light reflected from an object. According to an embodiment, the flash 220 may include one or more light emitting diodes (LEDs) (e.g., a red-green-blue (RGB) LED, a white LED, an infrared (IR) LED, or an ultraviolet (UV) LED) or a xenon lamp. The image sensor 230 may obtain an image corresponding to an object by converting light emitted or reflected from the object and transmitted via the lens assembly 210 into an electrical signal. According to an embodiment, the image sensor 230 may include one selected from image sensors having different attributes, such as a RGB sensor, a black-and-white (BW) sensor, an IR sensor, or a UV sensor, a plurality of image sensors having the same attribute, or a plurality of image sensors having different attributes. Each image sensor included in the image sensor 230 may be implemented using, for example, a charged coupled device (CCD) sensor or a complementary metal oxide semiconductor (CMOS) sensor.

The image stabilizer 240 may move the image sensor 230 or at least one lens included in the lens assembly 210 in a particular direction, or control an operational attribute (e.g., adjust the read-out timing) of the image sensor 230 in response to the movement of the camera module 180 or the electronic device 101 including the camera module 180. This allows compensating for at least part of a negative effect (e.g., image blurring) by the movement on an image being captured. According to an embodiment, the image stabilizer 240 may sense such a movement by the camera module 180 or the electronic device 101 using a gyro sensor (not shown) or an acceleration sensor (not shown) disposed inside or outside the camera module 180. According to an embodiment, the image stabilizer 240 may be implemented, for example, as an optical image stabilizer. The memory 250 may store, at least temporarily, at least part of an image obtained via the image sensor 230 for a subsequent image processing task. For example, if image capturing is delayed due to shutter lag or multiple images are quickly captured, a raw image obtained (e.g., a Bayer-patterned image, a high-resolution image) may be stored in the memory 250, and its corresponding copy image (e.g., a low-resolution image) may be previewed via the display device 160. Thereafter, if a specified condition is met (e.g., by a user's input or system command), at least part of the raw image stored in the memory 250 may be obtained and processed, for example, by the image signal processor 260. According to an embodiment, the memory 250 may be configured as at least part of the memory 130 or as a separate memory that is operated independently from the memory 130.

The image signal processor 260 may perform one or more image processing with respect to an image obtained via the image sensor 230 or an image stored in the memory 250. The one or more image processing may include, for example, depth map generation, three-dimensional (3D) modeling, panorama generation, feature point extraction, image synthesizing, or image compensation (e.g., noise reduction, resolution adjustment, brightness adjustment, blurring, sharpening, or softening). Additionally or alternatively, the image signal processor 260 may perform control (e.g., exposure time control or read-out timing control) with respect to at least one (e.g., the image sensor 230) of the components included in the camera module 180. An image processed by the image signal processor 260 may be stored back in the memory 250 for further processing, or may be provided to an external component (e.g., the memory 130, the display device 160, the electronic device 102, the electronic device 104, or the server 108) outside the camera module 180. According to an embodiment, the image signal processor 260 may be configured as at least part of the processor 120, or as a separate processor that is operated independently from the processor 120. If the image signal processor 260 is configured as a separate processor from the processor 120, at least one image processed by the image signal processor 260 may be displayed, by the processor 120, via the display device 160 as it is or after being further processed.

According to an embodiment, the electronic device 101 may include a plurality of camera modules 180 having different attributes or functions. In such a case, at least one of the plurality of camera modules 180 may form, for example, a wide-angle camera and at least another of the plurality of camera modules 180 may form a telephoto camera. Similarly, at least one of the plurality of camera modules 180 may form, for example, a front camera and at least another of the plurality of camera modules 180 may form a rear camera.

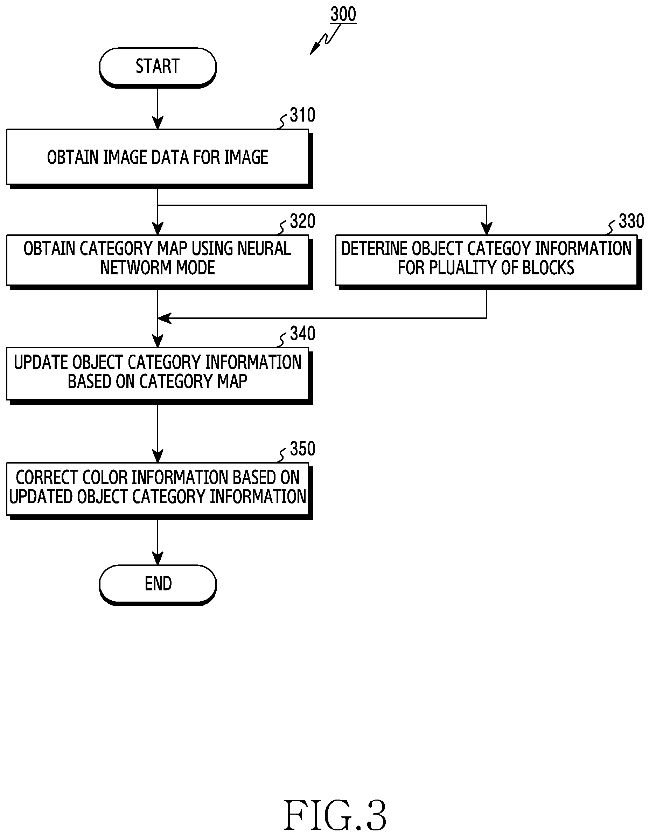

FIG. 3 is a flowchart 300 illustrating a process in which an electronic device (e.g., the electronic device 101 of FIG. 1) performs image signal processing, according to an embodiment.

In the disclosure, an operation of the electronic device may be understood as being performed by one or more processors (e.g., the processor 120 of FIG. 1) executing one or more instructions stored in a memory (e.g., the memory 130 of FIG. 1) to perform computations or control components of the electronic device. Alternatively, the one or more processors may be configured to perform the operation of the electronic device.

In an embodiment, the electronic device may perform operation 310 of obtaining image data for an image obtained through a camera (e.g., the camera module 180 of FIG. 1 or the camera module 180 of FIG. 2). For example, the electronic device may control the camera to output an image stream for displaying a preview image, based on execution of a camera application. For example, in response to a user input for capturing an image, the electronic device may generate an image corresponding to a set capture mode, based on data obtained through the camera.

In an embodiment, the electronic device may perform operation 320 of obtaining a category map for the image obtained in operation 310 by using a neural network model. For example, the electronic device may predict category information corresponding to the image by allowing a neural network unit (NPU) included in one or more processors to drive the neural network model. The neural network model may be generated by learning training data through a machine learning algorithm. The training data may include an image and a label for the image. For example, the label may include category information for classifying which subject is captured in pixels or a plurality of regions of the image. The category map may refer to information configured in a map format, indicating what type of subject is captured in each part of the image. For example, the category information included in the category map may include information indicating whether each region corresponds to any one of a background, the sky, a plant, skin, hair, clothing, or a pet. However, the disclosure is not limited to this example, and the type of category information may be variously configured according to a range supportable by an image signal processor (e.g., the image signal processor 160 of FIG. 2).

In an embodiment, the neural network model may be configured to receive an image as an input and output a category map including category information corresponding to pixels or a plurality of regions of the image. In an embodiment, the neural network model may be stored in a memory of the electronic device or may be stored in an external device. When the neural network model is stored in the external device, an operation of generating the category map using the neural network model may be performed by the external device, and the electronic device may receive information on the category map from the external device.

In an embodiment, in operation 320, the electronic device may obtain statistics data for the image including information of the category map. The statistics data may include information on the image in units of a plurality of blocks obtained by dividing the image into a plurality of regions. In the disclosure, a block for the image may refer to a region serving as a unit for performing a color correction operation (e.g., auto white balance (AWB)) on the image. For example, the statistics data may include an average value of pixel values of pixels included in each block (e.g., an average value of a red component, an average value of a green component, and an average value of a blue component) and category information (e.g., information corresponding to the block among pieces of information included in the category map).

In an embodiment, the electronic device may determine object category information for the plurality of blocks with respect to the image obtained in operation 310. In a process of performing an algorithm for performing AWB, the electronic device may determine object category information for determining an AWB gain with respect to a subject captured in a block, based on color information. For example, when a color of the block of the image corresponds to a sky color captured in the image, the electronic device may determine the object category information for the corresponding block as information indicating the sky, and may determine an AWB gain for performing white balance, based on a color corresponding to the sky. The electronic device may perform white balance on the image, based on the determined AWB gain.

In operation 340, the electronic device according to an embodiment may update the object category information, based on the category map. The electronic device may update object category information corresponding to at least one block among the plurality of blocks for the image, based on information included in the category map. For example, when the object category information determined in operation 330 indicates that a corresponding block is a gray region in which a gray subject is captured, and when the category map indicates that a region corresponding to the block is a region in which the sky is captured, the electronic device may change the object category information for the corresponding block to indicate a light blue region.

In operation 350, the electronic device according to an embodiment may correct color information of the image, based on the updated object category information. For example, the electronic device may determine an AWB gain value, based on the object category information, and may perform AWB on pixels included in a block corresponding to the object category information, based on the determined AWB gain value. For example, the electronic device may determine a color correction matrix (CCM), based on the object category information. The electronic device may correct color values of pixels included in a corresponding block, based on the determined color correction matrix.

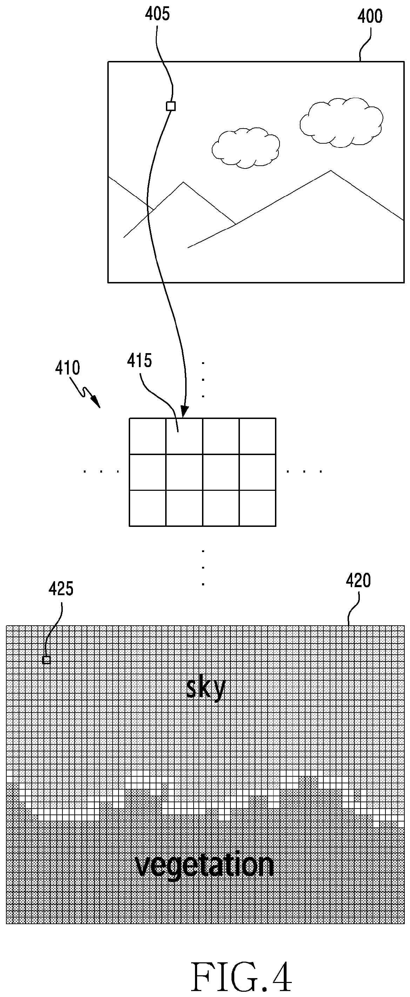

FIG. 4 illustrates concepts of statistics data 410 and a category map 420 for an image 400, according to an embodiment.

In an embodiment, an electronic device (e.g., the electronic device 101 of FIG. 1) may obtain the statistics data 410 including a block 415 corresponding to a region 405 within the image 400. For example, the statistics data may include the block 415 which contains an average value of pixel values of pixels included in the region 405. For example, the block 415 of the statistics data 410 may include a first average value of red component values, a second average value of green component values, and a third average value of blue component values included in the pixel values of the pixels within the region 405.

In an embodiment, the electronic device may obtain the category map 420 for the image 400 by using a neural network model. The category map 420 may include information indicating what type of subject is captured in a plurality of regions included in the image 400. For example, the electronic device may classify which type of subject is captured in a region of pixels by using semantic segmentation for each pixel of the image 400. The category map 420 may include category information 425 including a type of subject determined to occupy a largest area in the region 405 of the image 400. Referring to FIG. 4, the category information 425 may include information indicating the sky. The block 415 of the statistics data 410 may further include the category information 425 corresponding to the region 405.

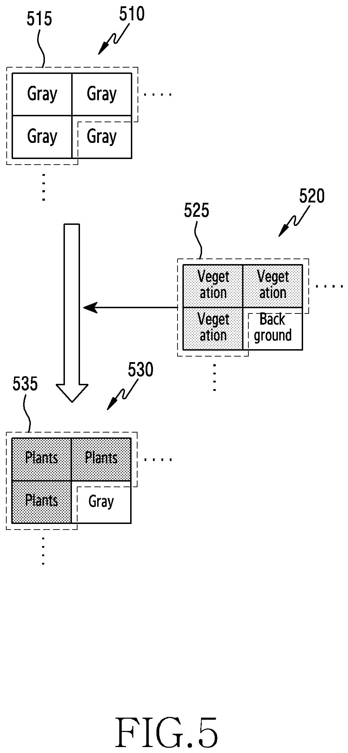

FIG. 5 illustrates concepts of updating object category information 510, according to an embodiment.

In an embodiment, an electronic device (e.g., the electronic device 101 of FIG. 1) may determine at least one block 515 for which the object category information 510 is updatable among a plurality of blocks. For example, the electronic device may determine at least one region 525 in a category map 520 including a category which may be reflected in the object category information. The electronic device may determine that the at least one block 515 corresponding to the at least one region 525 is updatable. Referring to FIG. 5, when a vegetation classification of the category map 520 corresponds to a plant (or a green object) of the object category information 510, the electronic device may determine that the at least one block 515 corresponding to the at least one region 525 classified as vegetation in the category map 520 is updatable.

In an embodiment, the electronic device may update at least part of the object category information 515 corresponding to the at least one block 515 determined to be updatable, based on the category map 520. Referring to FIG. 5, the electronic device may obtain updated object category information 530 including blocks 535 in which the at least one block 515 has been updated to "plant" corresponding to the category map 520.

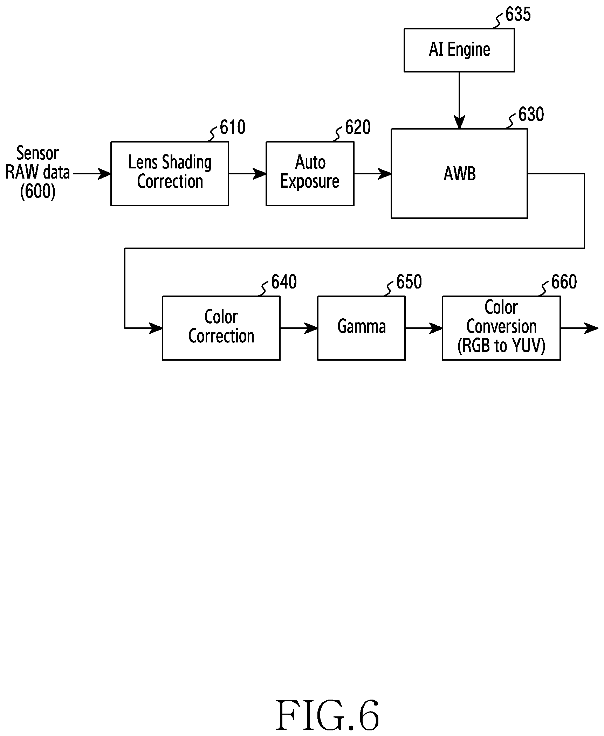

FIG. 6 is a block diagram illustrating a process of performing signal processing on raw data 600, according to an embodiment.

In an embodiment, an electronic device (e.g., the electronic device 101 of FIG. 1) may obtain a processed image from the raw data 600 output from an image sensor (e.g., the image sensor 230 of FIG. 2) through an image signal processing (ISP) chain included in the electronic device. An operation of performing an ISP procedure based on the ISP chain may be performed by one or more processors (e.g., the processor 120 of FIG. 1) of the electronic device. For example, the operation of performing the ISP procedure may be performed by a combination of at least one of an application processor, an NPU, and an image signal processor (e.g., the image signal processor 260 of FIG. 2).

For example, referring to FIG. 6, the electronic device may perform lens shading correction (LSC) 610. The LSC 610 may include an operation of correcting a phenomenon in which an amount of light decreases from a center of the image sensor toward a periphery due to a lens (e.g., at least one lens included in the lens assembly 210 of FIG. 2) of a camera (e.g., the camera module 180 of FIG. 1 or 2). The electronic device may perform an operation of auto exposure 620 on a result of performing the LSC 610. The operation of auto exposure 620 may include an operation of adjusting the overall brightness of a scene according to the detected amount of light.

In an embodiment, the electronic device may perform auto white balance (AWB) 630 on a result to which the auto exposure 620 has been applied. The AWB 630 may include an operation of adjusting color values of an image, based on a determined AWB gain value. For example, the electronic device may apply a red gain value to red components of pixel values included in the image, apply a green gain value to green components, and apply a blue gain value to blue components. The electronic device may perform the AWB 630 based on a category map obtained through an artificial intelligence (AI) engine 635.

In an embodiment, the AI engine 635 may include a neural network model configured to output a category map for an image when the image is input thereto. For example, the neural network model may be configured by being trained using training data in which the image and the category map are paired. A machine learning algorithm for training the neural network model may be implemented in various ways. The image input to the AI engine 635 may be configured in various ways depending on a method of implementing the electronic device according to an embodiment. For example, the image input to the AI engine 635 may be an image obtained as a result of performing color conversion 660. In this case, the electronic device may perform the AWB 630 again on the image for which the color conversion 660 has been performed. Alternatively, for example, the image input to the AI engine 635 may be the raw data 600 output from an image sensor.

In an embodiment, the electronic device may perform color correction 640 on a result of performing the AWB 630. The color correction 640 may include an operation of applying a color correction matrix to pixel values to correct color representation according to characteristics of the image sensor. The electronic device may perform the color correction 640 according to an updated color correction matrix, based on a category map. The electronic device may perform gamma correction 650 on a result of performing the color correction 640. The gamma correction 640 may include an operation of nonlinearly converting color component values to correspond to a nonlinear gamma characteristic of a display. The electronic device may perform the color conversion 650 depending on an image format on a result of performing the gamma correction 650. For example, the electronic device may convert an image represented based on an RGB color space into a YUV format.

The ISP procedure of FIG. 6 illustrates an example for describing an embodiment, and at least part of the ISP procedure may be replaced, omitted, or added.

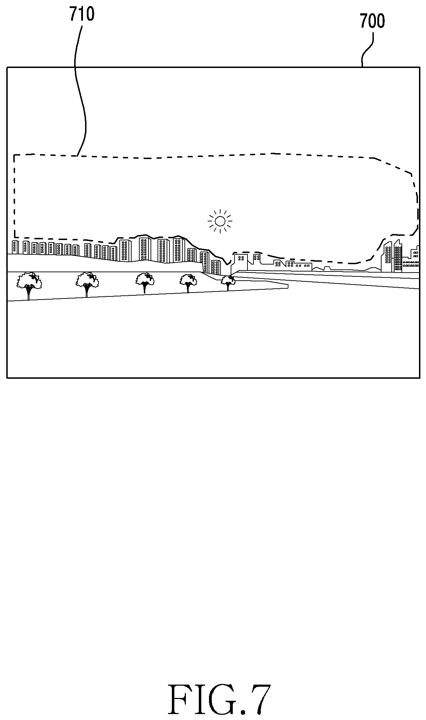

FIG. 7 illustrates an example of an image 700 obtained according to an embodiment.

In an embodiment, an electronic device (e.g., the electronic device 101 of FIG. 1) may determine which scene is captured in an image, based on a category map, and may correct a color of a region in which a subject corresponding to the determined scene is captured, based on updated object category information using the category map.

For example, referring to FIG. 7, when the image 700 includes a scene in which a sunset in the sky is captured, the electronic device may perform AWB or apply a color correction matrix to the image 700 to emphasize a specific color (e.g., yellow or red) of a region 710 in which the sky is captured.

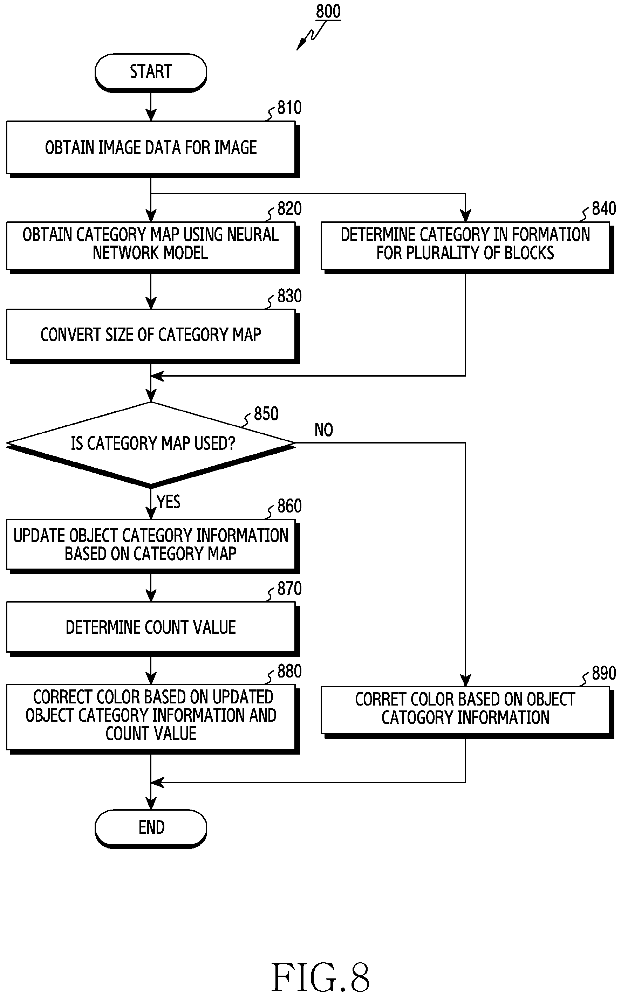

FIG. 8 is a flowchart 800 illustrating an example of a process in which an electronic device (e.g., the electronic device 101 of FIG. 1) performs image signal processing, according to an embodiment.

In an embodiment, the electronic device may perform operation 810 of obtaining image data for an image. The electronic device may perform operation 820 of obtaining a category map for the image using a neural network model. The electronic device may perform operation 840 of determining object category information for a plurality of blocks included in the image. Operation 810, operation 820, and operation 840 may correspond to operation 310, operation 320, and operation 330 of FIG. 3.

In operation 830, the electronic device according to an embodiment may convert a size of the obtained category map. For example, when the object category information is classified for 64 * 48 blocks and the category map classifies categories of subjects for 256 * 192 regions, four regions of the category map may correspond to one block. The electronic device may change the size of the category map to correspond to a plurality of blocks included in the image (regions for performing AWB). For example, the electronic device may determine, as a category corresponding to a block, a category having a largest count among the categories of the category map corresponding to the block, thereby changing the size of the category map to correspond to the plurality of blocks (e.g., 64 * 48).

In operation 850, the electronic device according to an embodiment may determine whether to perform a color correction operation using the category map. The electronic device may determine not to use the category map when the image obtained in operation 810 is subject to speed-priority processing. For example, when the electronic device obtains an image for which image processing speed is prioritized over image quality, the electronic device may determine not to use the category map. In an embodiment, when the category map is not used, the performing of operation 820 and operation 830 may also be omitted.

In an embodiment, the electronic device may determine at least one block for which object category information is to be updated among the plurality of blocks included in the image,. For example, as illustrated in FIG. 5, the electronic device may determine at least one updatable block. In operation 860, the electronic device according to an embodiment may update the object category information for the at least one updatable block, based on the category map.

In operation 870, the electronic device may determine at least one count value for the plurality of blocks included in the image. The at least one count value may include at least one of a category count value and a color count value. The category count value may correspond to a count of blocks classified as belonging to a category of a subject among the plurality of blocks. For example, the electronic device may determine, as a category count value for a sky category, a count of blocks of statistical data in which information of the subject according to the category map is the sky. The color count value may correspond to a count of blocks classified as corresponding to a specific color among the blocks classified as belonging to the category of the subject. For example, the electronic device may determine, as a category count value for red, a count of blocks for which color information classified according to the object category information is red.

In operation 880, the electronic device may perform color correction for the image, based on the updated object category information and the count value. For example, the electronic device may determine a category of a subject for which the category count value is greater than or equal to a first value. The electronic device may perform color correction based on a color count value for blocks belonging to the determined category. Based on a ratio of the color count value to the category count value being greater than or equal to a second value, the electronic device may perform AWB on the image according to a first AWB gain value. Based on the ratio of the color count value to the category count value being greater than or equal to the second value, the electronic device may correct a color of the image by applying a first color correction matrix. Based on the ratio of the color count value to the category count value being less than a third value, the electronic device may perform AWB on the image according to a second AWB gain value. Based on the ratio of the color count value to the category count value being less than the third value, the electronic device may correct the color of the image by applying a second color correction matrix. For example, the first AWB gain value may be determined by applying a first weight corresponding to at least one of the updated object category information and the count value to the second AWB gain value. The first weight may include, for example, at least one of a weight for a red component, a weight for a green component, and a weight for a blue component. The second AWB gain value may include, for example, a value corresponding to light source information determined through an algorithm of the AWB 630. Based on the ratio of the color count value to the category count value being less than the second value and greater than or equal to the third value, the electronic device may perform AWB on the image according to a third AWB gain value obtained by interpolating the first AWB gain value and the second AWB gain value. For example, the electronic device may determine the third AWB gain value by applying, to the second AWB gain value, a second weight obtained by interpolating a weight and a default value (e.g., 1). Based on the ratio of the color count value to the category count value being less than the second value and greater than or equal to the third value, the electronic device may correct the color of the image by applying a third color correction matrix obtained by interpolating the first color correction matrix and the second color correction matrix.

In an embodiment, an electronic device (e.g., the electronic device 101 of FIG. 1) may include a camera (e.g., the camera module 180 of FIG. 1 or the camera module 180 of FIG. 2), one or more processors (e.g., the processor 120 of FIG. 1 or the image signal processor 260 of FIG. 2), and a memory (e.g., the memory 130 of FIG. 1 or the memory 250 of FIG. 2). The memory (e.g., the memory 130 of FIG. 1 or the memory 250 of FIG. 2) may store a neural network model trained through machine learning to receive an image as an input and output a category map including category information classifying types of subjects corresponding to a plurality of regions of the image. The memory (e.g., the memory 130 of FIG. 1 or the memory 250 of FIG. 2) may store one or more instructions. The one or more instructions, when executed by the one or more processors (e.g., the processor 120 of FIG. 1 or the image signal processor 260 of FIG. 2), may cause the electronic device (e.g., the electronic device 101 of FIG. 1) to obtain image data for an image captured through the camera (e.g., the camera module 180 of FIG. 1 or the camera module 180 of FIG. 2). The one or more instructions, when executed by the one or more processors (e.g., the processor 120 of FIG. 1 or the image signal processor 260 of FIG. 2), may cause the electronic device (e.g., the electronic device 101 of FIG. 1) to obtain a category map corresponding to the image using the neural network model. The one or more instructions, when executed by the one or more processors (e.g., the processor 120 of FIG. 1 or the image signal processor 260 of FIG. 2), may cause the electronic device (e.g., the electronic device 101 of FIG. 1) to determine, with respect to a plurality of blocks dividing the image into a plurality of regions, object category information for classifying the plurality of blocks, based on colors. The one or more instructions, when executed by the one or more processors (e.g., the processor 120 of FIG. 1 or the image signal processor 260 of FIG. 2), may cause the electronic device (e.g., the electronic device 101 of FIG. 1) to the object category information for at least some of the plurality of blocks, based on the category map. The one or more instructions, when executed by the one or more processors (e.g., the processor 120 of FIG. 1 or the image signal processor 260 of FIG. 2), may cause the electronic device (e.g., the electronic device 101 of FIG. 1) to correct color information for the image, based on the updated object category information.

In an embodiment, the one or more instructions, when executed by the one or more processors (e.g., the processor 120 of FIG. 1 or the image signal processor 260 of FIG. 2), may cause the electronic device (e.g., the electronic device 101 of FIG. 1) to determine an auto white balance (AWB) gain value, based on the updated object category information. The one or more instructions, when executed by the one or more processors (e.g., the processor 120 of FIG. 1 or the image signal processor 260 of FIG. 2), may cause the electronic device (e.g., the electronic device 101 of FIG. 1) to correct the image, based on the AWB gain value.

In an embodiment, the one or more instructions, when executed by the one or more processors (e.g., the processor 120 of FIG. 1 or the image signal processor 260 of FIG. 2), may cause the electronic device (e.g., the electronic device 101 of FIG. 1) to determine at least one count value for the plurality of blocks. The one or more instructions, when executed by the one or more processors (e.g., the processor 120 of FIG. 1 or the image signal processor 260 of FIG. 2), may cause the electronic device (e.g., the electronic device 101 of FIG. 1) to correct the color information, based on the at least one count value.

In an embodiment, the at least one count value may include at least one of a category count value and a color count value. The category count value may include a value for the number of blocks classified as belonging to a category of a subject. The color count value may include a value for the number of blocks classified as corresponding to a specific color.

In an embodiment, the one or more instructions, when executed by the one or more processors (e.g., the processor 120 of FIG. 1 or the image signal processor 260 of FIG. 2), may cause the electronic device (e.g., the electronic device 101 of FIG. 1) to convert a size of the category map into a size corresponding to the plurality of blocks. The one or more instructions, when executed by the one or more processors (e.g., the processor 120 of FIG. 1 or the image signal processor 260 of FIG. 2), may cause the electronic device (e.g., the electronic device 101 of FIG. 1) to update object category information for the plurality of blocks, based on the category map having the converted size.

In an embodiment, the one or more instructions, when executed by the one or more processors (e.g., the processor 120 of FIG. 1 or the image signal processor 260 of FIG. 2), may cause the electronic device (e.g., the electronic device 101 of FIG. 1) to omit the updating of at least part of the object category information when the image is subject to speed-priority processing

In an embodiment, the one or more instructions, when executed by the one or more processors (e.g., the processor 120 of FIG. 1 or the image signal processor 260 of FIG. 2), may cause the electronic device (e.g., the electronic device 101 of FIG. 1) to determine at least one block to be updated among the plurality of blocks, based on the category map. The one or more instructions, when executed by the one or more processors (e.g., the processor 120 of FIG. 1 or the image signal processor 260 of FIG. 2), may cause the electronic device (e.g., the electronic device 101 of FIG. 1) to update object category information for the at least one block.

In an embodiment, the one or more instructions, when executed by the one or more processors (e.g., the processor 120 of FIG. 1 or the image signal processor 260 of FIG. 2), may cause the electronic device (e.g., the electronic device 101 of FIG. 1) to determine that the object category information for the at least one block is updatable when a category value included in the category map corresponding to the at least one block corresponds to any one of preset candidate values.

In an embodiment, the one or more instructions, when executed by the one or more processors (e.g., the processor 120 of FIG. 1 or the image signal processor 260 of FIG. 2), may cause the electronic device (e.g., the electronic device 101 of FIG. 1) to update a color correction matrix, based on the updated object category information. The one or more instructions, when executed by the one or more processors (e.g., the processor 120 of FIG. 1 or the image signal processor 260 of FIG. 2), may cause the electronic device (e.g., the electronic device 101 of FIG. 1) to correct a color of the image, based on the updated color correction matrix.

A method of processing an image signal by an electronic device (e.g., the electronic device 101 of FIG. 1) according to an embodiment may include obtaining image data for an image obtained through a camera (e.g., the camera module 180 of FIG. 1, the camera module 180 of FIG. 2) of the electronic device (e.g., the electronic device 101 of FIG. 1). The method may include obtaining a category map corresponding to the image using a neural network model trained through machine learning to receive the image as an input and output a category map including category information classifying types of subjects corresponding to a plurality of regions of the image. The method may include determining , with respect to a plurality of blocks dividing the image into a plurality of regions, object category information for classifying the plurality of blocks, based on colors. The method may include updating at least part of the object category information for at least some of the plurality of blocks, based on the category map. The method may include correcting color information for the image, based on the updated object category information.

In an embodiment, the correcting of the color information may include determining an AWB gain value, based on the updated object category information. The correcting of the color information may include correcting the image, based on the AWB gain value.

In an embodiment, the method may further include determining at least one count value for the plurality of blocks. The correcting of the color information may include correcting the color information, based on the at least one count value.

In an embodiment, the at least one count value may include at least one of a category count value and a color count value. The category count value may include a value for the number of blocks classified as belonging to a category of a subject. The color count value includes a value for the number of blocks classified as corresponding to a specific color.

In an embodiment, the obtaining of the category map may include converting a size of the category map into a size corresponding to the plurality of blocks.

In an embodiment, the method may include omitting the updating of at least part of the object category information when the image is subject to speed-priority processing.

In an embodiment, the updating of the at least part of the object category information may include determining at least one block to be updated among the plurality of blocks, based on the category map. The updating of the at least part of the object category information may include updating object category information for the at least one block.

In an embodiment, the determining of the at least one block to be updated may include determining that the object category information for the at least one block is updatable when a category value included in the category map corresponding to the at least one block corresponds to any one of preset candidate values.

In an embodiment, the method may include updating a color correction matrix, based on the updated object category information. The method may include correcting a color of the image, based on the updated color correction matrix.

In an embodiment, a non-transitory computer-readable recording medium may store a computer program which, when executed by an electronic device (e.g., the electronic device 101 of FIG. 1), causes the electronic device to perform an image signal processing method. The method may include obtaining image data for an image obtained through a camera (e.g., the camera module 180 of FIG. 1, the camera module 180 of FIG. 2) of the electronic device (e.g., the electronic device 101 of FIG. 1). The method may include obtaining a category map corresponding to the image using a neural network model trained through machine learning to receive the image as an input and output a category map including category information classifying types of subjects corresponding to a plurality of regions of the image. The method may include determining , with respect to a plurality of blocks dividing the image into a plurality of regions, object category information for classifying the plurality of blocks, based on colors. The method may include updating at least part of the object category information for at least some of the plurality of blocks, based on the category map. The method may include correcting color information for the image, based on the updated object category information.

In an embodiment, the correcting of the color information may include determining an AWB gain value, based on the updated object category information. The correcting of the color information may include correcting the image, based on the AWB gain value.

In an embodiment, the method may include identifying a block corresponding to a category designated in the category map. The method may further include increasing at least one count value for the designated category, based on the identified block. The correcting of the color information may include correcting the color information, based on the at least one count value.

In an embodiment, the at least one count value may include at least one of a category count value and a color count value. The category count value may include a value for the number of blocks classified as belonging to a category of a subject. The color count value may include a value for the number of blocks classified as corresponding to a specific color.

In an embodiment, the obtaining of the category map may include converting a size of the category map into a size corresponding to the plurality of blocks.

According to an embodiment, an electronic device and an image signal processing method capable of performing an appropriate AWB function, based on a color of a light source and a subject type, may be provided.

According to an embodiment, an electronic device and an image signal processing method capable of performing more appropriate color correction, based on a color of a light source and a subject type, may be provided.

Advantages acquired in the disclosure are not limited to the aforementioned advantages, and other advantages not mentioned herein may be clearly understood by those skilled in the art to which the disclosure pertains from the following descriptions.

Methods based on the embodiments disclosed in the claims and/or specification of the disclosure may be implemented in hardware, software, or a combination of both.

When implemented in software, a computer readable recording medium for storing one or more programs (i.e., software modules) may be provided. The one or more programs stored in the computer readable recording medium are configured for execution performed by one or more processors in the electronic device. The one or more programs include instructions for allowing the electronic device to execute the methods based on the embodiments disclosed in the claims and/or specification of the disclosure.

In the disclosure, a function or operation performed by an electronic device may be performed by at least one processor executing at least one instruction stored in a memory. The function or operation of the electronic device mentioned in the disclosure may be performed by one processor executing at least one instruction, or may be performed by a combination of multiple processors executing one instruction. It may be understood that the processor mentioned in this disclosure includes a circuit for controlling other components of the electronic device. For example, the at least one processor may include a central processing unit (CPU), a micro-processor unit (MPU), an application processor (AP), a communication processor (CP), or a neural processing unit (NPU), a system on chip (SoC), or an integrated circuit (IC), or an application-specific integrated circuit (ASIC), which is configured to execute at least one instruction. The at least one processor may be configured to perform the operation of the electronic device described above.

In the disclosure, programs (e.g., software modules or software) may be stored in a random access memory and/or a non-volatile memory including a flash memory, a read only memory (ROM), an electrically erasable programmable read only memory (EEPROM), a magnetic disc storage device, a compact disc-ROM (CD-ROM), digital versatile discs (DVDs), other forms of optical storage devices, or a magnetic cassette. Alternatively, the programs may be stored in a memory configured in combination of all or some of these storage media. The memory may be constructed of a single storage medium or a combination of a plurality of storage media. The at least one instruction may be stored in the single storage medium, or may be stored in the plurality of storage media in a distributed manner.

Further, the program may be stored in an attachable storage device capable of accessing the electronic device through a communication network such as the Internet, an Intranet, a local area network (LAN), a wide LAN (WLAN), or a storage area network (SAN) or a communication network configured by combining the networks. The storage device may have access to a device for performing an embodiment of the disclosure via an external port. In addition, an additional storage device on a communication network may have access to the device for performing the embodiment of the disclosure.

In the aforementioned specific embodiments of the disclosure, a component included in the disclosure is expressed in a singular or plural form according to the specific embodiment proposed herein. However, the singular or plural expression is selected properly for a situation proposed for the convenience of explanation, and thus the various embodiments of the disclosure are not limited to a single or a plurality of components. Therefore, a component expressed in a plural form may also be expressed in a singular form, or vice versa.

In addition, in the disclosure, the term "unit", "module", or the like may be a hardware component such as a processor or a circuit, and/or a software component executed by the hardware component such as the processor.

The "unit" and the "module" may be implemented by a program stored in an addressable storage medium and executable by the processor. For example, the "unit" and "module" may be implemented by software components, object-oriented software components, class components, and task components, processes, functions, attributes, procedures, subroutines, segments of program code, drivers, firmware, microcode, circuitry, data, databases, data structures, tables, arrays, and variables.

Specific implementations described in the disclosure are only one embodiment, and do not limit the scope of the disclosure in any way. For brevity of the specification, descriptions on the conventional electronic components, control systems, software, and other functional aspects of the systems may be omitted.

In addition, in the disclosure, "including at least one of a, b, or c" may mean "including only a", "including only b", "including only c", "including a and b", "including b and c", " including a and c", or "including a, b, and c".

While the disclosure has been shown and described with reference to certain preferred embodiments thereof, it will be understood by those skilled in the art that various changes in form and details may be made therein without departing from the spirit and scope of the disclosure as defined by the appended claims. Therefore, the scope of the disclosure is defined not by the detailed description thereof but by the appended claims, and all differences within equivalents of the scope will be construed as being included in the disclosure.

## Claims

1. An electronic device comprising:
a camera;
one or more processors; and
a memory configured to store one or more instructions and a neural network model trained through machine learning to output a category map including category information for classifying types of subjects corresponding to a plurality of regions of an input image,
wherein the one or more instructions, when executed by the one or more processors, cause the electronic device to:
obtain image data for an image obtained through the camera;
obtain a category map corresponding to the image by using the neural network model;
determine, with respect to a plurality of blocks dividing the image into a plurality of regions, object category information for classifying the plurality of blocks, based on colors;
update at least part of the object category information for at least some of the plurality of blocks, based on the category map; and
correct color information for the image, based on the updated object category information.

2. The electronic device of claim 1, wherein the one or more instructions, when executed by the one or more processors, cause the electronic device to:
determine an auto white balance (AWB) gain value, based on the updated object category information; and
correct the image, based on the AWB gain value.

3. The electronic device of claim 1, wherein the one or more instructions, when executed by the one or more processors, cause the electronic device to:
determine at least one count value for the plurality of blocks; and
correct the color information, based on the at least one count value.

4. The electronic device of claim 3,
wherein the at least one count value includes a category count value and/or a color count value;
wherein the category count value includes a value for the number of blocks classified as belonging to a category of a subject, and
wherein the color count value includes a value for the number of blocks classified as corresponding to a specific color.

5. The electronic device of claim 1, wherein the one or more instructions, when executed by the one or more processors, cause the electronic device to:
convert a size of the category map into a size corresponding to the plurality of blocks; and
update object category information for the plurality of blocks, based on the converted category map.

6. The electronic device of claim 1, wherein the one or more instructions, when executed by the one or more processors, cause the electronic device to omit the updating of at least part of the object category information when the image is subject to speed-priority processing.

7. The electronic device of claim 1, wherein the one or more instructions, when executed by the one or more processors, cause the electronic device to:
determine at least one block to be updated among the plurality of blocks, based on the category map; and
update object category information for the at least one block.

8. The electronic device of claim 7, wherein the one or more instructions, when executed by the one or more processors, cause the electronic device to determine that the object category information for the at least one block is updatable when a category value included in the category map corresponding to the at least one block corresponds to any one of preset candidate values.

9. The electronic device of claim 1, wherein the one or more instructions, when executed by the one or more processors, cause the electronic device to:
update a color correction matrix, based on the updated object category information; and
correct a color of the image, based on the updated color correction matrix updated based on the object category information.

10. A method of processing an image signal by an electronic device, the method comprising:
obtaining image data for an image obtained through a camera of the electronic device;
obtaining a category map corresponding to the image using a neural network model trained through machine learning to output a category map including category information classifying types of subjects corresponding to a plurality of regions of an input image;
determining, with respect to a plurality of blocks dividing the image into a plurality of regions, object category information for classifying the plurality of blocks, based on colors;
updating at least part of the object category information for at least some of the plurality of blocks, based on the category map; and
correcting color information for the image, based on the updated object category information.

11. The method of claim 10, wherein the correcting of the color information comprises:
determining an AWB gain value, based on the updated object category information; and
correcting the image, based on the AWB gain value.

12. The method of claim 10, further comprising determining at least one count value for the plurality of blocks,
wherein the correcting of the color information comprises correcting the color information, based on the at least one count value,
wherein the at least one count value includes at least one of a category count value and a color count value,
wherein the category count value includes a value for the number of blocks classified as belonging to a category of a subject, and
wherein the color count value includes a value for the number of blocks classified as corresponding to a specific color.

13. The method of claim 10, wherein the obtaining of the category map comprises converting a size of the category map into a size corresponding to the plurality of blocks.

14. The method of claim 10, wherein the updating of the at least part of the object category information comprises:
determining at least one block to be updated among the plurality of blocks, based on the category map; and
updating object category information for the at least one block,
wherein the determining of the at least one block to be updated comprises determining that the object category information for the at least one block is updatable when a category value included in the category map corresponding to the at least one block corresponds to any one of preset candidate values.

15. A non-transitory computer-readable recording medium storing a computer program which, when executed by an electronic device, causes the electronic device to perform an image signal processing method, the method comprising:
obtaining image data for an image obtained through a camera of the electronic device;
obtaininga category map corresponding to the image using a neural network model trained through machine learning to receive the image as an input and output a category map including category information classifying types of subjects corresponding to a plurality of regions of the image;
determining , with respect to a plurality of blocks dividing the image into a plurality of regions, object category information for classifying the plurality of blocks, based on colors;
updating at least part of the object category information for at least some of the plurality of blocks, based on the category map; and
correcting color information for the image, based on the updated object category information.
